# EUROPÄISCHE PATENTSCHRIFT

(11) **EP 2 548 300 B1**
(45) Veröffentlichungstag und Bekanntmachung des Hinweises auf die Patenterteilung: **21.05.2014**
(21) Anmeldenummer: 11708412.9
(22) Anmeldetag: 14.03.2011
(51) Int. Cl.: H02P 3/18, H02P 3/26, B60T 17/22, G01L 5/28

(54) **VERFAHREN ZUM BETREIBEN EINES ANTRIEBSSYSTEM UND ANTRIEBSSYSTEM**
METHOD FOR OPERATING A DRIVE SYSTEM, AND DRIVE SYSTEM
PROCÉDÉ D'EXPLOITATION D'UN SYSTÈME D'ENTRAÎNEMENT ET SYSTÈME D'ENTRAÎNEMENT

(30) Priorität: 17.03.2010 DE 102010011788
(43) Veröffentlichungstag der Anmeldung: 23.01.2013
(73) Patentinhaber: Sew-Eurodrive GmbH & Co. KG, 76646 Bruchsal (DE)
(72) Erfinder: GNIRSS, Bernhard, 76275 Ettlingen (DE)
(86) Internationale Anmeldenummer: PCT/EP2011/001246
(87) Internationale Veröffentlichungsnummer: WO 2011/113566

(56) Entgegenhaltungen:
- EP-A2- 0 924 583
- EP-A2- 2 030 855
- CH-A- 516 106
- DE-A1- 3 311 041
- US-A1- 2007 228 821

## Beschreibung

Die Erfindung betrifft ein Verfahren zum Betreiben eines Antriebssystem und ein Antriebssystem.

Es ist bekannt, bei Antriebssystemen einen umrichtergespeisten Elektromotor vorzusehen, der von einer übergeordneten Steuerung Steuerbefehle erhält. Der Motor ist dabei auch als Bremsmotor ausführbar.

Aus der EP 2 030 855 A2 ist ein Verfahren zum Prüfen der Wirksamkeit einer Bremse bekannt, wobei eine Geschwindigkeitsregelung die Bremskraft ausregelt und somit die Geschwindigkeit beim Bremsentest unbeeinflusst bleibt. Somit ist also die Bremskraft der Bremse kleiner als die Antriebskraft des Antriebs.

Aus der US 20071228821 A1 ist eine hydraulisch betätigbare Bremse eines Fahrzeugs bekannt.

Der Erfindung liegt daher die Aufgabe zugrunde, die Sicherheit eines Antriebssystems weiter zu erhöhen.

Erfindungsgemäß wird die Aufgabe bei dem Verfahren Antriebssystem nach den in Anspruch 1 und bei dem Antriebssystem nach den in Anspruch 8 angegebenen Merkmalen gelöst.

Wichtige Merkmale der Erfindung bei dem Verfahren sind, dass das Verfahren zum Betreiben eines Antriebssystem vorgesehen ist, wobei der Antrieb, insbesondere umfassend einen umrichtergespeisten Elektromotor, eine betätigbare Bremse umfasst,
wobei zu einem Auslösezeitpunkt zum Testen der Bremse ein Bremsvorgang ausgelöst wird, insbesondere unabhängig vom Umrichter,
- bei dem bei Erreichen einer Grenzüberwachungskurve die Bremse ausgelöst wird,
- danach die Bremsverzögerung bestimmt wird,
- bei Unterschreiten eines kritischen Wertes an Bremsverzögerung eine Warnung abgegeben wird und/oder eine Aktion, insbesondere ein Abschalten des Antriebssystems oder ein Versetzten des Antriebssystems in einen anderen sicheren Zustand, ausgelöst wird.

Von Vorteil ist dabei, dass der bestimmt Bremsverzögerungswert mit einem kritischen Wert verglichen wird und somit der real auftretende Bremsverzögerungswert mit einem Sollwert verglichen wird, der eine sichere Funktion des Antriebssystems gewährleistet.

Mit der Erfindung wird es ermöglicht, von Zeit zu Zeit die Bremsfunktion der Bremse zu überprüfen, indem statt eines umrichtergesteuerten Abbremsens ein Abbremsen mittels der Bremse ausgeführt wird, wobei die Grenzüberwachungskurve vorzugsweise einer beim umrichtergesteuerten Abbremsen erreichbaren Bremsverzögerung gleicht. Somit ist überprüfbar, ob die Bremse zumindest die Bremskraft des umrichtergesteuerten Bremsens erreicht oder nicht.

Da jeder Bremsvorgang, also auch der umrichtergesteuerte Bremsvorgang ohne Betätigen der Bremse mittels der Grenzüberwachungskurve überwachbar ist und somit auch stets das umrichtergesteuerte Bremsen überwachbar ist, mit der Grenzüberwachungskurve überwacht wird, die um einen Zeitversatz vom Auslösezeitpunkt beabstandet ist, ist das Überwachen unverändert auch beim Bremsentest ausführbar. Der Unterschied bei der Ausführung des Bremsentests zum üblichen umrichtergesteuerten Abbremsen ist nur, dass das umrichtergesteuerte Abbremsen zum Auslösezeitpunkt nicht eingeleitet wird sondern das Erreichen der Grenzüberwachungskurve sozusagen riskiert wird. Bei Erreichen der Grenzüberwachungskurve wird dann die Bremse ausgelöst, wofür ebenfalls keine besonderen Maßnahmen notwendig sind, da die Sicherheitssteuerung auch bei Normalbetrieb, also nicht Bremsentest, die Bremse auslöst, wenn die Grenzüberwachungskurve erreicht wird.

Bei einer vorteilhaften Ausgestaltung ist das Antriebssystem mit einer Sicherheitssteuerung ausgeführt, die über einen Steuerkanal mit einem Umrichter verbunden ist, der einen Elektromotor speist,
wobei die Sicherheitssteuerung über einen weiteren Steuerkanal mit der Bremse verbunden ist, wobei das Bremsmoment der Bremse dem vom Elektromotor erzeugten Drehmoment überlagert wird. Von Vorteil ist dabei, dass mittels der Sicherheitssteuerung der Bremsentest steuerbar ist und die sicherheitsbezogene Überwachung mit entsprechender Auslösung der Bremse bei Überschreiten der Grenzüberwachungskurve stets aktiv bleibt.

Bei einer vorteilhaften Ausgestaltung ist die Grenzüberwachungskurve eine Geschwindigkeits-Zeit-Kurve oder eine Drehzahl-Zeit-Kurve. Von Vorteil ist dabei, dass eine Bremsbeschleunigung durch ein einfach darstellbares Geradenstück darstellbar ist und somit eine einfache Parametrierung der Grenzüberwachungskurve ausführbar ist. Insbesondere ist nur der Zeitabstand zum Auslösezeitpunkt und die Steigung des Geradenstücks zu parametrieren.

Bei einer vorteilhaften Ausgestaltung ist die Grenzüberwachungskurve vom Auslösezeitpunkt beabstandet um ein Zeitintervall, insbesondere um ein vorgebbares Zeitintervall. Von Vorteil ist dabei, dass die Reaktionsgeschwindigkeit und Sensibilität einstellbar ist, insbesondere zum schnellen Auslösen der Bremse.

Bei einer vorteilhaften Ausgestaltung weist die Grenzüberwachungskurve einen vorgebbaren, insbesondere zeitabhängigen, Geschwindigkeitsverlauf oder Drehzahlverlauf auf
oder die Grenzüberwachungskurve aus zum Auslösezeitpunkt bestimmten Werten von Zustandsgrößen des Antriebssystems, insbesondere aus der zum Auslösezeitpunkt vorhandenen Drehzahl und/oder aus der zum Auslösezeitpunkt vom Antriebssystem bewegten Masse oder Trägheitsmoment bestimmt wird, insbesondere indem eine Sollbremsbeschleunigung bestimmt und/oder vorausgesetzt wird. Von Vorteil ist dabei, dass eine optimierte Anpassung an die Zustandsparameter der Anlage mit dem Antriebssystem ausführbar ist.

Bei einer vorteilhaften Ausgestaltung wird in zeitlichen Abständen das Testen der Bremse wiederholt. Von Vorteil ist dabei, dass ein genügend hohes Maß an Sicherheit in einfacher Weise erreichbar ist.

Bei einer vorteilhaften Ausgestaltung ist die Bremse eine elektromagnetische betätigbare Bremse, insbesondere wobei ein Lüften der Bremse durch Bestromen der Bremsspule und ein Auslösen der Bremse durch Nicht-Bestromen der Bremse erreicht wird. Von Vorteil ist dabei, dass bei Nichtbetströmen den Sicherheitsfail einieitet und somit auch bei Stromausfall dieser erreichbar ist.

Bei einer vorteilhaften Ausgestaltung treibt das Antriebssystem eine Last im Wesentlichen horizontal an, insbesondere also keine Gravitationskraft wirksam ist. Von Vorteil ist dabei, dass das Abbremsen unkritisch ist.

Bei einer vorteilhaften Ausgestaltung weist die durch die Bremse bewirkbare Bremsbeschleunigung einen größeren Betrag auf als die vom Umrichter bewirkbare Bremsbeschleunigung. Von Vorteil ist dabei, dass im Sicherheitsfall ein genügend schnelles Abbremsen erreichbar ist.

Wichtige Merkmale bei dem Antriebssystem zur Durchführung eines vorgenannten Verfahrens sind, dass das Antriebssystem mit einer Sicherheitssteuerung ausgeführt ist, die über einen Steuerkanal mit einem Umrichter verbunden ist, der einen Elektromotor speist,
wobei die Sicherheitssteuerung über einen weiteren Steuerkanal mit der Bremse verbunden ist, wobei das Bremsmoment der Bremse dem vom Elektromotor erzeugten Drehmoment überlagert wird. Von Vorteil ist dabei, dass die Abbremsung von einer Sicherheitssteuerung steuerbar ist und somit auch ein Bremsentest steuerbar ist von der Sicherheitssteuerung.

Bei einer vorteilhaften Ausgestaltung ist von der Bremse und/oder von dem Umrichter zur Sicherheitssteuerung ein jeweiliger Diagnosekanal vorgesehen, insbesondere so dass Diagnosedaten rückmeldbar sind an die Sicherheitssteuerung und somit die Wirkung der von der Sicherheitssteuerung über den Steuerkanal ausgesendeten Steuerbefehle überwachbar ist. Von Vorteil ist dabei, dass Zustandsgrößen des umrichtergespeisten Elektromotors und der Bremse rückmeldbar und berücksichtigbar sind.

Bei einer vorteilhaften Ausgestaltung ist die Drehzahl oder Geschwindigkeit des bewegbar angeordneten Teils des Elektromotors, insbesondere Rotor, vom Umrichter auf einen Sollwert hin regelbar. Von Vorteil ist dabei, dass ein drehzahlgeregelter Betrieb ermöglicht ist und alternativ die Drehzahl mittels des Umrichters erfassbar ist.

Bei einer vorteilhaften Ausgestaltung weist die Bremse einen bestrombaren Elektromagnet auf, mit welchem zum Lüften der Bremse die Federkraft eines Federelements überwindbar ist. Von Vorteil ist dabei, dass die Bremse bei Bestromung der Bremsspule lüftbar ist und bei Nicht-Bestromen auslösbar ist.

Weitere Vorteile ergeben sich aus den Unteransprüchen. Merkmalskombinationen und modifikationen sind möglich im Rahmen der zugehörigen Patentansprüche.

Die Erfindung wird nun anhand von Abbildungen näher erläutert:

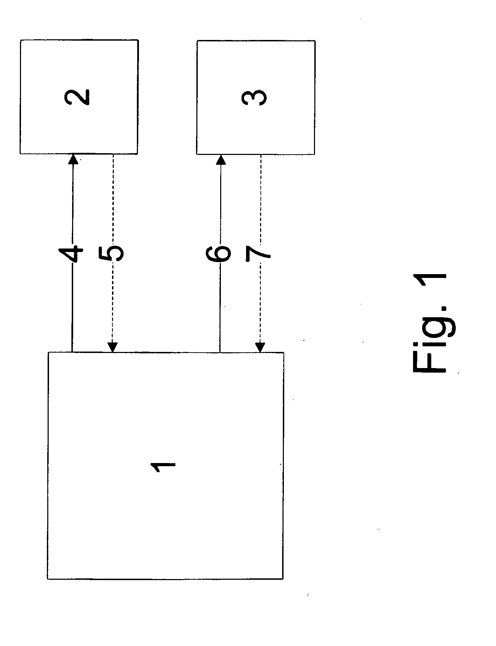

In der Figur 1 ist eine erfindungsgemäße Anlage schematisch skizziert.
In der Figur 2 ist die Wirkung eines erfindungsgemäßen Ablaufs schematisch skizziert.

In einer erfindungsgemäßen Anlage mit einem Antriebssystem, das vorzugsweise horizontal, also ohne wesentliche Beeinflussung durch Gravitationskraft, arbeitet, ist ein Elektromotor zum Antreiben eines Objekts von einem Umrichter 2 gespeist und somit die Drehzahl regelbar, wobei hierzu die Drehzahl des Elektromotors erfasst wird und der Signalelektronik des Umrichters 2 zugeführt wird.

Eine Sicherheitssteuerung 1 sendet über einen Steuerkanal 4 ein Freigabesignal an den Umrichter 2, so dass dieser die Drehzahl des Elektromotors auf einen Sollwert hin regelt. Im Fehlerfall oder Notfall ist auch ein Abschaltsignal an den Umrichter 2 übermittelbar.

Über einen Diagnosekanal 5 sind Werte von Zustandsparametern des Umrichters 2 an die Sicherheitssteuerung 1 übermittelbar.

Weiter ist eine Bremse 3 vorgesehen, die ein Abbremsen der Rotorwelle des Motors ermöglicht. Dabei ist die Bremse 3 beispielsweise als eine elektromagnetisch betätigbare Bremse 3 ausführbar.

Die Sicherheitssteuerung ist über einen Steuerkanal 6 mit der Bremse 3 verbunden und ist somit in der Lage, die Bremse auszulösen. Über einen Diagnosekanal 7 ist die Rückmeldung von Werten von Zustandsparametern an die Sicherheitssteuerung ermöglicht.

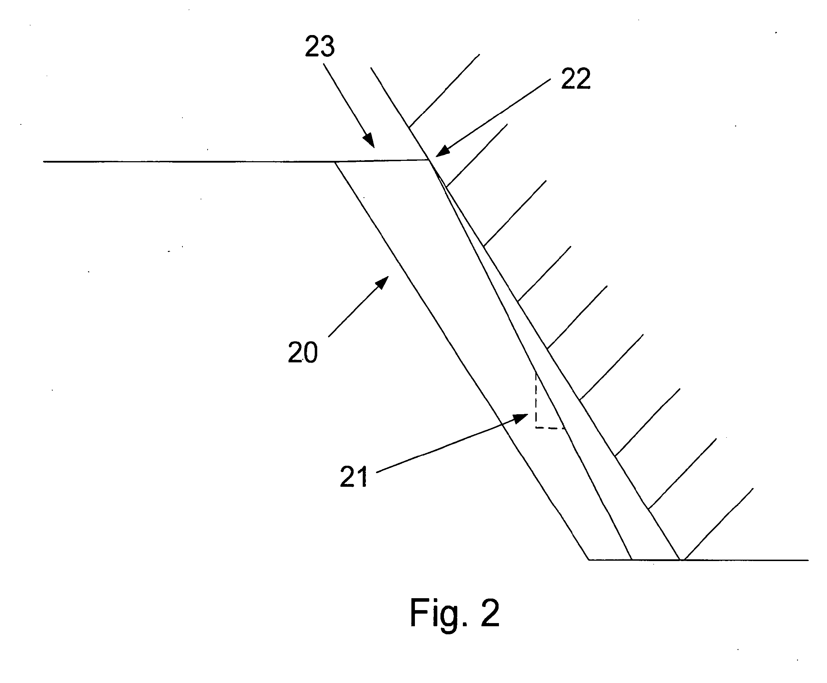

In Figur 2 ist ein erfindungsgemäßer Ablauf näher dargestellt.

Im Betrieb regelt der Umrichter auf eine Drehzahl hin. Bei Einleitung eines Bremsvorgangs wird üblicherweise eine Bremsverzögerung mittels des Umrichters gesteuert ausgeführt, wodurch sich der schematisch angedeutete Geschwindigkeitsverlauf 20, also eine abnehmende Drehzahlrampe, ergibt. Hierbei nimmt die Drehzahl in der Zeit linear ab, bis der Antrieb zum Stillstand kommt. Die Bremsverzögerung wird dabei erreicht, indem der Motor vom Umrichter auf die zum jeweiligen Zeitpunkt aktuelle Drehzahl hin geregelt wird, wobei diese proportional zum Zeitverlauf abnimmt.

Zur Ausführung eines in zeitlichen Abständen wiederkehrend vorgesehenen Bremsentests wird ein Bremsvorgang eingeleitet, ohne dass der Umrichter die beschriebene abnehmende Drehzahlrampe ansteuert. Somit ergibt sich der bremsengesteuerte Verlauf 22.

Die Sicherheitssteuerung 1 überwacht den Drehzahlverlauf und löst bei Erreichen einer Grenzüberwachungskurve, also bei Berühren oder Eintritt in den schraffierten Bereich der Figur 2, die Bremse aus. Dies ist der Zeitpunkt der Testeinleitung 23. Somit wird eine stärkere Bremsverzögerung erreicht als mittels des Umrichters erreichbar ist.

Nachfolgend wird eine Messung 21 der Bremsverzögerung ausgeführt, wobei zu zwei Zeitpunkten die jeweiligen Drehzahlen bestimmt werden und somit aus dem Quotient der Drehzahldifferenz und der zugehörigen Zeitdifferenz eine Bremsbeschleunigung, also ein Bremsverzögerungswert, bestimmt wird.

Unterschreitet der so bestimmte Wert einen kritischen Wert, wird eine Warnung oder entsprechende Aktion ausgelöst, da die Bremse ihre Sollbremsverzögerung nicht erreicht hat.

Die Erfassung der Drehzahl wird mittels vom Umrichter unabhängiger Drehzahlsensoren ausgeführt, so dass die Sicherheit weiter erhöht ist.

Die erfindungsgemäße Ausführung ist besonders gut geeignet bei Horizontalachse, also bei Fehlen des Einflusses der Gravitationskraft.

Zur Ausführung einer redundanten Überwachung ist auch der Umrichter zum Überwachen der Drehzahl geeignet ausgeführt, beispielsweise mit einem weiteren Drehzahlsensor. Somit ist ein Vergleich der beiden unabhängig bestimmten Werte ermöglicht.

### Bezugszeichenliste

- 1: Sicherheitssteuerung
- 2: Umrichter
- 3: Bremse
- 4: Steuerkanal
- 5: Diagnosekanal
- 6: Steuerkanal
- 7: Diagnosekanal
- 20: umrichtergesteuerter Verlauf
- 21: Messung der Verzögerung, also Bremsbeschleunigung
- 22: bremsengesteuerter Verlauf
- 23: Testeinleitung

## Patentansprüche

1. Verfahren zum Betreiben eines Antriebssystem, wobei der Antrieb, umfassend einen umrichtergespeisten Elektromotor, eine betätigbare Bremse (3) umfasst,
**wobei die Drehzahl des Elektromotors erfasst wird und der Signalelektronik des Umrichters (2) zugeführt wird, mit welchem die Drehzahl auf ihren Sollwert hin geregelt wird,**
**wobei das Antriebssystem mit einer Sicherheitssteuerung (1) ausgeführt ist, die über einen Steuerkanal (4) mit dem Umrichter (2) verbunden ist, der einen Elektromotor speist,**
**wobei die Sicherheitssteuerung (1) über einen weiteren Steuerkanal (6) mit der Bremse (3) verbunden ist, wobei das Bremsmoment der Bremse dem vom Elektromotor erzeugten Drehmoment überlagert wird, wobei die durch die Bremse bewirkbare Bremsbeschleunigung einen größeren Betrag aufweist als der Betrag der vom Umrichter bewirkbaren Bremsbeschleunigung,**
**wobei** zu einem Auslösezeitpunkt zum Testen der Bremse ein Bremsvorgang ausgelöst wird, insbesondere unabhängig vom Umrichter,
- wobei die Sicherheitssteuerung (1) den Drehzahlverlauf überwacht und bei Erreichen einer Grenzüberwachungskurve die Bremse ausgelöst wird, **wobei die Grenzüberwachungskurve eine Geschwindigkeits-Zeit-Kurve ist oder eine Drehzahl-Zeit-Kurve ist,**
- die Bremsverzögerung bestimmt wird,
- bei Unterschreiten eines kritischen Wertes an Bremsverzögerung eine Warnung abgegeben wird und/oder eine Aktion, insbesondere ein Abschalten des Antriebssystems oder ein Versetzen des Antriebssystems in einen anderen sicheren Zustand, ausgelöst wird,
**wobei die Grenzüberwachungskurve aus der zum Auslösezeitpunkt bestimmten Drehzahl bestimmt wird, indem eine Sollbremsbeschleunigung vorausgesetzt wird,**
**oder wobei die Grenzüberwachungskurve aus der zum Auslösezeitpunkt vom Antriebssystem bewegten Masse oder Trägheitsmoment bestimmt wird, indem eine Sollbremsbeschleunigung bestimmt wird.**

2. Verfahren nach mindestens einem der vorangegangenen Ansprüche,
**dadurch gekennzeichnet, dass**
die Grenzüberwachungskurve vom Auslösezeitpunkt beabstandet ist um ein Zeitintervall, insbesondere um ein vorgebbares Zeitintervall.

3. Verfahren nach mindestens einem der vorangegangenen Ansprüche,
**dadurch gekennzeichnet, dass**
**die Grenzüberwachungskurve einen zeitabhängigen Geschwindigkeitsverlauf oder Drehzahlverlauf aufweist.**

4. Verfahren nach mindestens einem der vorangegangenen Ansprüche,
**dadurch gekennzeichnet, dass**
in zeitlichen Abständen das Testen der Bremse wiederholt wird.

5. Verfahren nach mindestens einem der vorangegangenen Ansprüche,
**dadurch gekennzeichnet, dass**
die Bremse eine elektromagnetische betätigbare Bremse ist, insbesondere wobei ein Lüften der Bremse durch Bestromen der Bremsspule und ein Auslösen der Bremse durch Nicht-Bestromen der Bremse erreicht wird.

6. Verfahren nach mindestens einem der vorangegangenen Ansprüche,
**dadurch gekennzeichnet, dass**
das Antriebssystem eine Last im Wesentlichen horizontal antreibt, insbesondere also keine Gravitationskraft wirksam ist.

7. Verfahren nach mindestens einem der vorangegangenen Ansprüche,
**dadurch gekennzeichnet, dass**
der Umrichter zum Auslösezeitpunkt der Umrichter momentenlos geschaltet wird.

8. Antriebssystem zur Durchführung eines Verfahrens nach mindestens einem der vorangegangenen Ansprüche,
**dadurch gekennzeichnet, dass**
das Antriebssystem mit einer Sicherheitssteuerung ausgeführt ist, die über einen Steuerkanal (4) mit einem Umrichter (2) verbunden ist, der einen Elektromotor speist,
wobei die Sicherheitssteuerung (1) über einen weiteren Steuerkanal (6) mit der Bremse (3) verbunden ist, wobei das Bremsmoment der Bremse dem vom Elektromotor erzeugten Drehmoment überlagert wird,
**wobei mittels der Sicherheitssteuerung (1) der Drehzahlverlauf überwachbar ist,**
**wobei die Drehzahl oder Geschwindigkeit des bewegbar angeordneten Teils des Elektromotors, insbesondere Rotor, vom Umrichter auf einen Sollwert hin regelbar ist.**

9. Antriebssystem nach mindestens einem der vorangegangenen Ansprüche,
**dadurch gekennzeichnet, dass**
von der Bremse und/oder von dem Umrichter zur Sicherheitssteuerung ein jeweiliger Diagnosekanal vorgesehen ist, insbesondere so dass Diagnosedaten rückmeldbar sind an die Sicherheitssteuerung und somit die Wirkung der von der Sicherheitssteuerung über den Steuerkanal ausgesendeten Steuerbefehle überwachbar ist.

10. Antriebssystem nach mindestens einem der vorangegangenen Ansprüche,
**dadurch gekennzeichnet, dass**
die Bremse einen bestrombaren Elektromagnet aufweist, mit welchem zum Lüften der Bremse die Federkraft eines Federelements überwindbar ist.

## Claims

1. Method for operating a drive system, wherein the drive, comprising a converter-fed electric motor, comprises an actuable brake (3),
wherein the rotational speed of the electric motor is detected and supplied to the signal electronics of the converter (2), by which the rotational speed is adjusted towards its target value,
wherein the drive system is configured with a safety control (1) which is connected via a control channel (4) to the converter (2) which feeds an electric motor,
wherein the safety control (1) is connected to the brake (3) via a further control channel (6), wherein the braking torque of the brake is superimposed on the torque generated by the electric motor, wherein the braking acceleration producible by the brake has a greater magnitude than the magnitude of the braking acceleration producible by the converter,
wherein at a trigger time point for testing the brake a braking process is triggered, in particular independently of the converter,
- wherein the safety control (1) monitors the rotational-speed profile and the brake is triggered when a limit monitoring curve is reached, wherein the limit monitoring curve is a speed-time curve or a rotational speed-time curve,
- the braking deceleration is determined,
- if the braking deceleration falls short of a critical value, a warning is emitted and/or an action is triggered, in particular a deactivation of the drive system or a transfer of the drive system into a different, safe state,
wherein the limit monitoring curve is determined from the rotational speed determined at the trigger time point by assuming a target braking acceleration,
or wherein the limit monitoring curve is determined from the mass or moment of inertia moved by the drive system at the trigger time point by determining a target braking acceleration.

2. Method according to at least one of the preceding claims,
**characterised in that**
the limit monitoring curve is spaced from the trigger time point by a time interval, in particular by a presettable time interval.

3. Method according to at least one of the preceding claims,
**characterised in that**
the limit monitoring curve has a time-dependent speed profile or rotational-speed profile.

4. Method according to at least one of the preceding claims,
**characterised in that**
the testing of the brake is repeated at time intervals.

5. Method according to at least one of the preceding claims,
**characterised in that**
the brake is an electromagnetic actuable brake, in particular wherein a release of the brake is achieved by energising of the brake coil and a triggering of the brake is achieved by non-energising of the brake.

6. Method according to at least one of the preceding claims,
**characterised in that**
the drive system drives a load substantially horizontally, in particular therefore no gravitational force is acting.

7. Method according to at least one of the preceding claims,
**characterised in that**
the converter is switched to torqueless at the trigger time point of the converters.

8. Drive system for carrying out a method according to at least one of the preceding claims,
**characterised in that**
the drive system is configured with a safety control which is connected via a control channel (4) to a converter (2) which feeds an electric motor,
wherein the safety control (1) is connected to the brake (3) via a further control channel (6), wherein the braking torque of the brake is superimposed on the torque generated by the electric motor,
wherein the rotational-speed profile is monitorable by means of the safety control (1),
wherein the rotational speed or the speed of the movably arranged part of the electric motor, in particular rotor, is adjustable towards a target value by the converter.

9. Drive system according to at least one of the preceding claims,
**characterised in that**
a respective diagnostic channel is provided from the brake and/or the converter to the safety control, in particular so that diagnostic data is feedable back to the safety control and thus the effect of the control commands issued by the safety control via the control channel is monitorable.

10. Drive system according to at least one of the preceding claims,
**characterised in that**
the brake has an energisable electromagnet, by which the spring force of a spring element can be overcome to release the brake.

## Revendications

1. Procédé d'actionnement d'un système d'entraînement, sachant que l'entraînement, comprenant un moteur électrique alimenté par un convertisseur, inclut un frein (3) pouvant être manoeuvré,
procédé dans lequel la vitesse angulaire dudit moteur électrique est détectée, puis délivrée à l'unité électronique de signaux dudit convertisseur (2) par lequel ladite vitesse angulaire est régulée pour adopter sa valeur de consigne,
ledit système d'entraînement étant équipé d'une commande de sécurité (1) raccordée, par l'intermédiaire d'un canal de commande (4), audit convertisseur (2) qui alimente un moteur électrique,
ladite commande de sécurité (1) étant connectée au frein (3) par l'intermédiaire d'un autre canal de commande (6), sachant que le couple de freinage dudit frein est superposé au couple de rotation engendré par ledit moteur électrique, l'accélération de freinage, pouvant être provoquée par ledit frein, présentant alors une grandeur supérieure à la grandeur de l'accélération de freinage pouvant être provoquée par ledit convertisseur,
un processus de freinage étant déclenché à un instant de déclenchement, en vue de vérifier le frein, en particulier d'une manière indépendante dudit convertisseur, sachant
- que la commande de sécurité (1) surveille le profil de la vitesse angulaire, et que le frein est déclenché lorsqu'une courbe de surveillance limite est atteinte, ladite courbe de surveillance limite étant une courbe vitesse-temps ou une courbe vitesse angulaire-temps,
- que la décélération de freinage est déterminée,
- qu'un dépassement négatif d'une valeur critique de décélération de freinage implique l'émission d'une alerte et/ou le déclenchement d'une action, notamment une mise à l'arrêt du système d'entraînement ou une transposition dudit système d'entraînement vers un autre état sûr,
la courbe de surveillance limite étant déterminée sur la base de la vitesse angulaire déterminée à l'instant de déclenchement, une accélération de freinage de consigne étant alors posée en préalable,
ou bien ladite courbe de surveillance limite étant déterminée sur la base de la masse mise en mouvement par ledit système d'entraînement audit instant de déclenchement, ou du couple d'inertie, une accélération de freinage de consigne étant alors déterminée.

2. Procédé selon au moins l'une des revendications précédentes,
**caractérisé par le fait que**
la courbe de surveillance limite est espacée du point de déclenchement par un intervalle de temps, en particulier par un intervalle de temps pouvant être préétabli.

3. Procédé selon au moins l'une des revendications précédentes,
**caractérisé par le fait que**
la courbe de surveillance limite présente un profil de vitesse ou un profil de vitesse angulaire tributaire du temps.

4. Procédé selon au moins l'une des revendications précédentes,
**caractérisé par le fait que**
la vérification du frein est réitérée par intervalles dans le temps.

5. Procédé selon au moins l'une des revendications précédentes,
**caractérisé par le fait que**
le frein est un frein électromagnétique actionnable, sachant notamment qu'un désaérage dudit frein est obtenu par alimentation en courant de la bobine de frein, et qu'un déclenchement dudit frein est obtenu par absence d'alimentation dudit frein en courant.

6. Procédé selon au moins l'une des revendications précédentes,
**caractérisé par le fait que**
le système d'entraînement entraîne une charge pour l'essentiel dans le sens horizontal, c'est-à-dire qu'aucune force gravitationnelle n'agit en particulier.

7. Procédé selon au moins l'une des revendications précédentes,
**caractérisé par le fait que**
le convertisseur est enclenché sans couple à l'instant de déclenchement des convertisseurs.

8. Système d'entraînement dédié à la mise en oeuvre d'un procédé conforme à au moins l'une des revendications précédentes,
**caractérisé par le fait que**
ledit système d'entraînement est équipé d'une commande de sécurité raccordée, par l'intermédiaire d'un canal de commande (4), à un convertisseur (2) qui alimente un moteur électrique,
ladite commande de sécurité (1) étant connectée au frein (3) par l'intermédiaire d'un autre canal de commande (6), le couple de freinage dudit frein étant alors superposé au couple de rotation engendré par ledit moteur électrique,
le profil de la vitesse angulaire pouvant être surveillé au moyen de ladite commande de sécurité (1),
sachant que le convertisseur peut réguler la vitesse angulaire ou la vitesse de la partie douée de mobilité dans ledit moteur électrique, en particulier du rotor, pour lui faire adopter une valeur de consigne.

9. Système d'entraînement selon au moins l'une des revendications précédentes,
**caractérisé par le fait**
**qu'**il est prévu un canal respectif de diagnostic partant du frein et/ou du convertisseur et gagnant la commande de sécurité, notamment de façon telle que des données de diagnostic puissent être renvoyées à ladite commande de sécurité et que, de la sorte, il soit possible de surveiller l'action des instructions de commande délivrées par ladite commande de sécurité, par l'intermédiaire du canal de commande.

10. Système d'entraînement selon au moins l'une des revendications précédentes,
**caractérisé par le fait que**
le frein comporte un électro-aimant pouvant être alimenté en courant, par lequel la force élastique d'un élément élastique peut être surmontée en vue du désaérage dudit frein.
